# EUROPEAN PATENT SPECIFICATION

(11) **EP 1 728 621 B1**
(45) Date of publication and mention of the grant of the patent: **13.08.2008**
(21) Application number: 06447015.6
(22) Date of filing: 27.01.2006
(51) Int. Cl.: B32B 7/14, B32B 27/12

(54) **Laminate against alkaline salts/moisture and structural subsidences in buildings**
Laminat gegen Alkalisalze/Feuchtigkeit und strukturelles Senken eines Gebäudes
Stratifié contre les sels alcalins/l'humidité et l'affaissement structurel des édifices

(30) Priority: 05.06.2005 BE 200500286
(43) Date of publication of application: 06.12.2006
(73) Proprietor: De Paepe, Freddy, 9308 Gijzegem (BE)
(72) Inventor: De Paepe, Freddy, 9308 Gijzegem (BE)
(74) Representative: Brants, Johan P.E.

(56) References cited:
- EP-A- 1 541 338
- US-A- 4 103 061
- US-A- 5 846 372
- PATENT ABSTRACTS OF JAPAN vol. 2003, no. 12, 5 December 2003 (2003-12-05) & JP 2004 076526 A (SEIREN CO LTD), 11 March 2004 (2004-03-11)

## Description

### FIELD OF THE INVENTION

The invention relates to a flexible, liquid tight laminate with alkaline resistance used for protection of a wall and/or floor against alkaline salts/moisture and structural subsidences in buildings. The laminate is made by bonding a liquid tight membrane in between two alkaline resistant meshes. The invention also provides a method for the application of the laminate. Furthermore the present invention relates to a method for providing a liquid tight seal between two laminates.

### BACKGROUND OF THE INVENTION

The use of watertight membranes for protecting building components against penetration of water or moisture is already well known. Often these membranes are combined with other sheets such as reinforcing layers and/or layers with other desired beneficial properties. Fixating these sheets together is achieved in various ways, such as fusing by heat and/or pressure, mechanical anchoring or by means of auxiliary adhesive materials. Following documents illustrate one or more of these features.

For example, JP2000179100A2 describes a waterproof sheet formed by layering a thermoplastic polymer material on a reinforcing cloth. The thermoplastic polymer material uses thermoplastic elastomer and the reinforcing cloth uses a single layer sheet constituted of vertical and lateral strings of glass fiber or a multilayered sheet formed by layering such sheets. In construction, the waterproof sheets are heat-fused together or the waterproof sheets are fused by means of an auxiliary material.

EP0678618A1 describes a flexible plastic strip for use as a water vapor barrier. The plastic strip consists of a non-porous thermoplastic film, produced by the action of heat, on at least one side of the reinforcing layer of plastic and/or glass fiber based material(s). The different layers are fixed to each other by mechanical anchorage and/or adhesive bonding.

Reinforcement of the waterproof sheets according to JP2000179100A2 and EP0678618A1 is achieved by adding a reinforcing layer made of plastic or glass fiber. RU2234577C2 also uses a glass fiber or polyester web to achieve this goal, but according to this document the web is used as a base for the waterproof building material. The production method relates to impregnating and covering the web in a mixture including bitumen, polymeric additive and filler for obtaining a polymer-bitumen bonding layer.

JP2002021264A2 relates to an external heat-insulation composite waterproof construction structure. A thermal insulating material covered with a sheet type roofing material is laid on the surface of a substrate and mechanically fixed together by metal fitting. After that, on top of the roofing material, an FRP layer is formed directly or by means of an adhesive butyl tape layer.

JP11310999A2 describes the use of a waterproof sheet in a waterproof repair method of a building roof floor. The sheet is composed by laminating a fluorocarbon resin film, an aluminium foil, a reinforced film, an adhesive layer and a mold releasing agent. The different layers are laminated by a joint tape at the end of the sheet. After repairing a crack in a building roof floor with for example an urethane-based primer and after drying, the waterproof sheet is stuck to the roof by means of the adhesive layer.

In the prior art techniques have thus been disclosed involving the connection of different layers of a laminate with chemical or thermal means. US 4,103,061 and US 5,846,372 for instance disclose laminates wherein the different layers of the laminates are held together by means of an adhesive, which when heated, binds the different layers of the laminate to one another.

A frequently occurring problem, especially in old houses, is the presence of rising damp in walls. Such walls can be treated by injection of a water repellent material. After this treatment the wall has to dry before the injected walls can be rendered and plastered again. Usually extra protection by means of a waterproof sheet is applied to the wall to prevent future rising damp from happening. These sheets have to be alkaline resistant because the treated walls contain alkaline salts, which were carried by the rising damp and became crystallized during the drying process.

JP2004076526A2 takes these problems into account and provides a mortar bedding sheet displaying moisture permeability, waterproofness and alkali resistance. The sheet is arranged between the bedding of a wall and the mortar material. The mortar bedding sheet comprises a moisture permeable and waterproof layer and an alkali protection layer which protects the moisture permeable and waterproof layer from alkali solution. Enhancement of the alkali resistance of the sheet can be achieved by applying a chemical in the alkali protection layer with a neutralization, water repellent and alkali resistance enhancing function.

After treatment against rising damp it is advisable to allow the walls to dry at a ratio of 1.5 to 2 cm thickness of wall per month. Furthermore, the walls are loaded with alkaline salts which crystallize during the drying process. Because of that, a long drying period is needed before injected walls can become rendered and finished.
Another problem of the prior art is that fixation of a waterproof sheet to a wall or floor is frequently achieved by means of an adhesive layer, which is quite expensive.
Also, most of the presently known protection systems have relatively stiff membranes and require the replacement of the rendering and plastering of the entire wall.
Furthermore, injection and/or incorporation of a protection system according to the prior art doesn't prevent moisture from under the floor or injection from rising in the plasterwork.

### SUMMARY OF THE INVENTION

The present invention aims to address the needs of the prior art and particularly provides a laminate according to claim 1, suitable as a liquid barrier in constructions and developed for protecting building components against alkaline salts/moisture and structural subsidences. The improvement lies in easy handling and application of the present laminate combined with a simple design and effectiveness. Furthermore, the laminate can be applied directly after treatment against rising damp thereby allowing immediate finishing of the wall after injection. The drying process occurs further from the outside of the wall or through the cleft. Also a method for application of the laminate is provided by the present invention according to claim 6, and claim 7 describes a method for providing a liquid tight seal between two laminates.

According to the present invention the mesh of the first and third layer is locally connected to the liquid tight membrane of the second layer, thereby obtaining free parts of mesh between the connections of the first and second and the third and second layer. Also, the local connections are provided as a stripe to allow continuous sealing during manufacturing. To ensure a solid lamination of the different layers, the connections are provided over substantially the entire length or width of the present laminate.

The different layers of the laminate according to the present invention are locally attached to each other by thermal, mechanical and/or chemical bonding to provide solid connections.

Strips of a material with a specific feature, described in the following embodiments, can be added to the different layers of the laminate to mediate the connections. In an embodiment lamination occurs by placing two small strips of a heat-fusible material onto the mesh of the first and third layer and heat-fusing them to the membrane of the second layer, thereby incorporating both layers of mesh. Another embodiment describes the use of two small strips of a stitchable material that, after stitching them together, incorporate and thereby connect the different layers of the present laminate to each other. In a third embodiment the mesh of the first and third layer is locally adhered to the membrane of the second layer by means of a strip of adhesive material, placed on both sides of the membrane. To provide an extra fixing of the mesh to the adhesive material and to prevent that different laminates stick together during packaging a covering tape is placed over the mesh of the first and the third layer, thereby covering the adhesive material extending through the holes in the mesh.

The laminate according to the present invention comprises a liquid tight membrane, consisting essentially of a thermoplastic polymer and preferably of low density polyethylene (LDPE), in between two sheets of mesh, preferably a mesh made of glass fiber and more preferably Gytex®. The membrane and mesh are flexible and alkaline resistant. Thus, local lamination of these layers results in a flexible, alkaline resistant and liquid tight laminate. The alkaline resistance and liquid tightness allows the present laminate to be applied to building components suffering from water or moisture, such as rising damp. Its flexibility makes it possible to apply the laminate while the affected covering layer, such as rendering, plaster, cement mortar, equalization layers, etc., has to be replaced only as far as the water front or crystallization front.

The flexibility of the laminate according to the present invention also allows the finished laminate to be turned onto a roll, which is easier to store, to transport and to manipulate for application.

The present invention also provides a method for application of the laminate, comprising cutting the laminate to the desired size with a scissor or a knife, anchoring the laminate to the wall or floor and subsequent covering the applied laminate. Anchoring occurs by pressing the holes of the free parts of the mesh into the freshly applied covering layer described before. Further covering of the laminate occurs by pressing a covering layer, as described before, into the holes, that remained after lamination, of the other mesh. The improvement here lies in the simple enclosure of the laminate between two covering layers, described before, without the need for adhesive layers or other auxiliary material to fixate the laminate to its place.

Further a method is claimed by the present invention, providing a liquid tight seal between two laminates. After anchoring a first laminate to the wall or floor, the end of a second laminate is positioned between the membrane and the mesh most distant from the wall or floor at the end of the first laminate. A strip of liquid tight, adhesive material is applied in between the membrane of the first laminate and the adjacent mesh of the second laminate to provide a liquid tight sealing between both laminates. By sealing different laminates at overlapping ends whereby one laminate encloses the other laminate, and incorporating the whole into the covering layers, the risk of leakage is much smaller than with laminates sealed together by fusing or by means of an auxiliary material.

### BRIEF DESCRIPTION OF THE DRAWINGS

Fig. 1 displays the three layers of the laminate according to the present invention.
Fig. 2 shows the strip of a local connection of the laminate.
Fig. 3 demonstrates an embodiment of the invention whereby a strip of a fusible material is used for bonding of the different layers of the laminate.
Fig. 4 shows a top view of the embodiment demonstrated in Fig. 3.
Fig. 5 demonstrates an embodiment of the invention whereby a laminate tape and covering tape is used for bonding the different layers of the laminate.
Fig. 6 displays the embodiment demonstrated in Fig. 5 as a top view.

### DETAILED DESCRIPTION OF THE INVENTION

The laminate provided by the present invention is suitable as a fluid barrier in constructions and is developed for protecting building components against alkaline salts, penetration of water or moisture, such as rising damp, and structural subsidences. Its strength lies in its easy handling and application combined with a simple design and effectiveness. Furthermore, the laminate can be applied directly after treatment against rising damp thereby allowing immediate finishing of the wall after injection. The drying process occurs further from the outside of the wall or through the cleft. Also several other needs of the prior art as discussed before are addressed by the laminate.

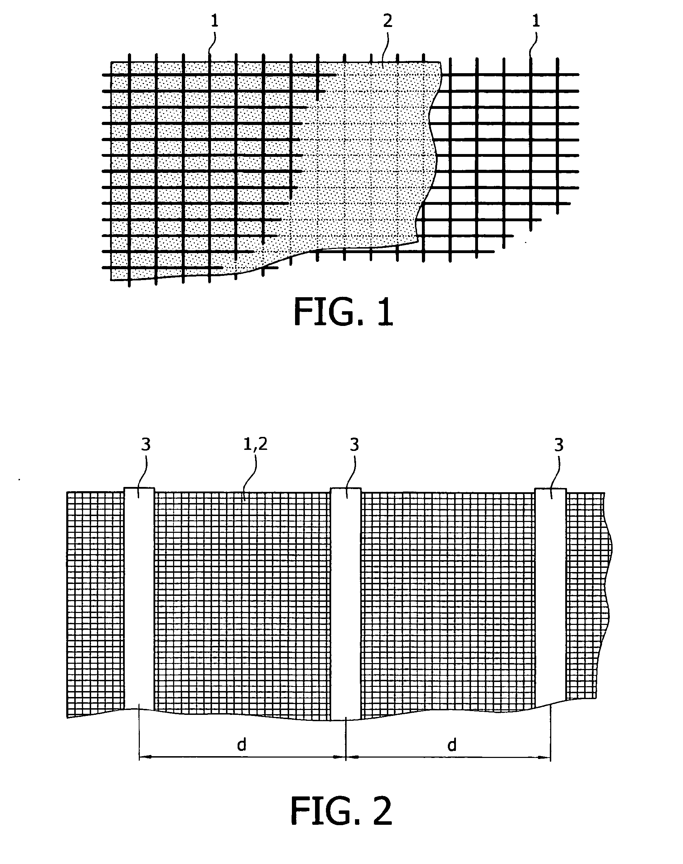

The laminate, according to the present invention and demonstrated in Figs. 1 and 2, is formed by layering at least a liquid tight membrane (2) in between two sheets of alkaline resistant mesh (1) and locally laminating them together at regular distances. Lamination occurs by thermal, mechanical or chemical bonding and the stripes (3) resulting from this lamination are formed over substantially the entire length or width of the laminate. This way, local solid connections are formed between the different layers of the laminate, thereby displaying free parts of mesh (1) between them. These free parts of mesh (1) can be used to anchore the laminate during incorporation into the covering layers, as will be described later in more detail.

The connections (3) holding the different layers (1, 2) of the laminate together can be mediated by the addition of strips (3, 3') of a material with a specific feature, as will be described in the following embodiments.

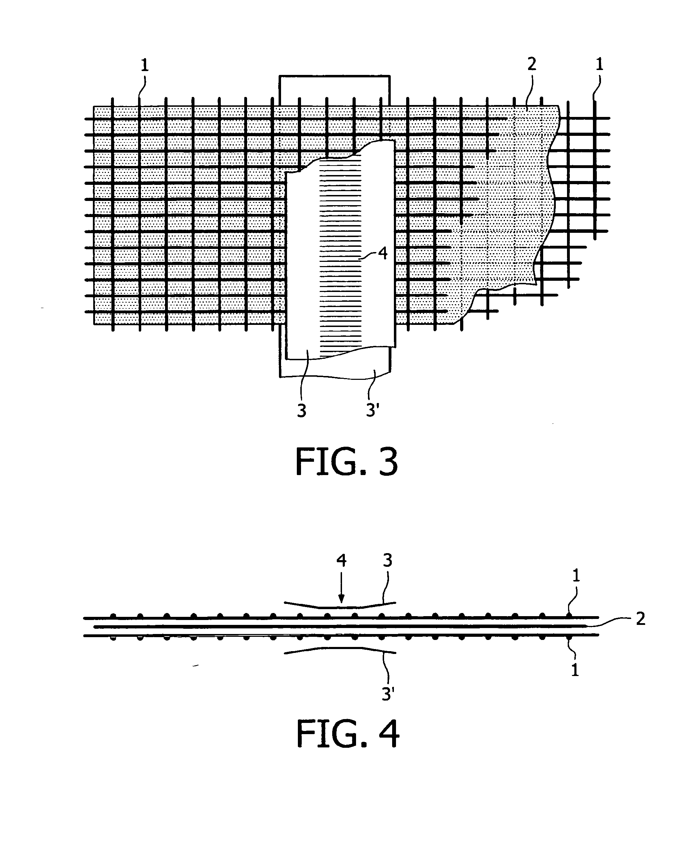

According to a first embodiment, displayed in Fig. 3 and 4, a strip (3) of a heat-fusible material is placed on top of the mesh (1) on one side of the laminate and a second strip (3') is placed on top of the second mesh (1) on the other side of the laminate. The first and second strip (3, 3') are heat-fused to the liquid tight membrane (2), thereby enclosing both layers of mesh (1). The fused connections (4) have a width in the range of 5 to 30 mm, and preferably 20 mm, and two adjacent connections (3) are separated over a distance (d) of approximately 10 to 90 cm, preferably 30 to 70 cm and more preferably 55 cm. A second embodiment differs from the first embodiment by application of a strip (3) of stitchable material used to stitch the layers together. At each strip of stitchable material lamination (4) is achieved by one or more rows of stitching. Between every two adjacent stitched connections (3) a distance (d) of approximately 10 to 90 cm, preferably 30 to 70 cm and more preferably 55 cm is provided.

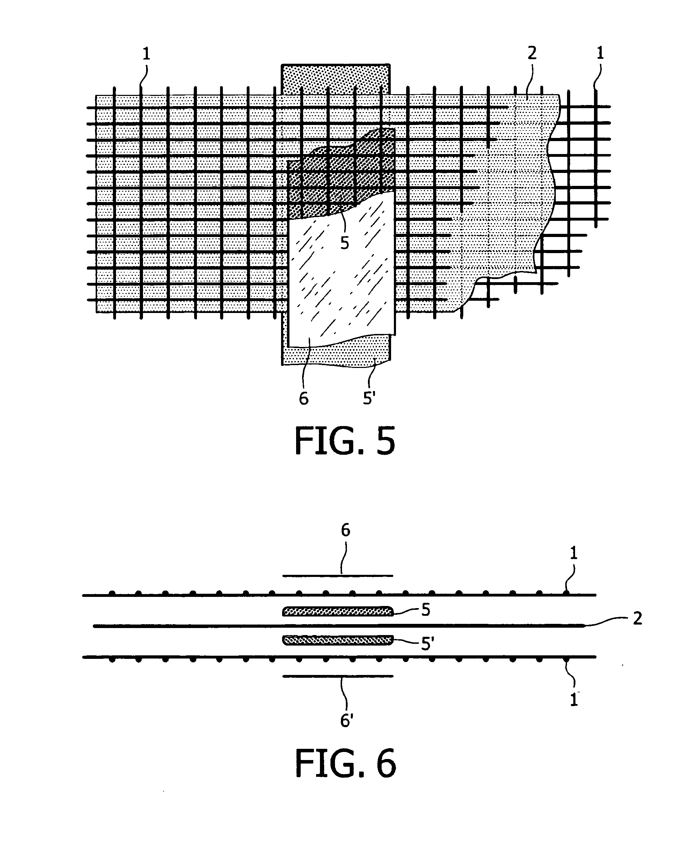

Another embodiment, as demonstrated in Figs. 5 and 6, relates to the laminate bonded by placing a strip (5, 5') of an adhesive material between the liquid tight membrane (2) and each mesh (1). The adhesive material (5, 5') is by preference a laminate tape and even more preferably an elastic butyl tape. This band of adhesive material (5, 5') is characterized in that it is resistant to water, moisture and alkaline salts, has a thickness of between 0.1 and 5 mm, preferably 0.6 to 3 mm and more preferably 1 mm and has a width of between 5 to 50 mm, preferably 15 to 30 mm and more preferably 20 mm. The band of adhesive material (5, 5') is applied such that two adjacent bands (3) are separated over a distance (d) of 10 to 100 cm, preferably 20 to 80 cm and more preferably 55 cm. As an extra fixing of the mesh (1) to the adhesive material (5, 5') a covering tape (6, 6') is applied, which is preferably placed over the adhesive material (5, 5') extending through the holes in the mesh (1). Also this way different bands of adhesive material (5, 5') won't stick to each other during packaging. The covering tape (6, 6') has to be alkaline and moisture resistant and is also provided with an ageing resistant glue.

The liquid tight membrane (2) is a flexible layer which is waterproof, moisture impermeable and resistant to alkaline salts. The membrane (2) is made out of a thermoplastic polymer and in particular a thermoplastic elastomer. By preference, LDPE is used to produce the liquid tight membrane (2). The membrane (2) has a width between 40 and 200 cm, preferably 75 to 150 cm and more preferably 100 cm. The thickness of the membrane (2) lies between 0.01 and 1 mm, preferably 0.05 to 0.5 mm and more preferably 0.1 mm.

The mesh (1) comprises a net made out of an alkaline resistant material, preferably glass fiber. Even more preferably Gytex® is used as mesh (1). The dimensions of the holes in the mesh (1) are between 2 x 2 mm and 10 x 10 mm, preferably 4 x 4 mm and 7 x 7 mm and more preferably 5.5 x 5.5 mm. The weight of the mesh (1) is defined as between 20 to 110 g/m², preferably 35 to 80 g/m² and more preferably approximately 58 g/m². Also the mesh (1) is characterized in supporting a stress at deformation of 450 to 1000 N/5 cm, preferably 560 to 800 N/5 cm and more preferably 700 to 750 N/5 cm.

The present invention also relates to a method for applying the laminate described before. Prior to application the laminate is cut to size with a scissor or a knife. Subsequently one side of the laminate is pressed against the wall or floor, thereby forcing the free parts of the mesh (1) to enter the fresh covering layer provided on the wall or floor. This covering layer can be (hydrofuge) rendering, cement mortar, plaster, stucco, equalization layer, etc., depending on application to a wall or floor and the degree of damage by water, moisture or alkaline salts or the risk thereof. A second covering layer, as described before, is pressed into the holes of the free parts of the second mesh (1), thereby hiding the laminate and preparing the wall or floor for further finishing, such as painting or carpeting. This way the layers of mesh (1) are used to anchor the laminate between two covering layers and no expensive adhesive layer or other auxiliary fixing material is needed.

To prevent moisture from under the floor or injection from rising into the newly applied second covering layer the edge of the laminate is folded in order to cover the floor. After incorporation of the laminate into the covering layers of the wall, this edge can be cut off before the floor is finished.

The present invention also relates to a method for providing a liquid tight seal between two flexible laminates. Hereby a first laminate is anchored to the wall or floor as described before. The edge of a second laminate is positioned as a whole in between the liquid tight membrane and the mesh most distant from the wall of the first laminate. The overlapping pieces of both laminates are sealed together by means of a liquid tight, adhesive material applied between the liquid tight membrane of the first laminate and the mesh of the second laminate adjacent to this membrane of the first laminate. Subsequently the second laminate can be anchored to the wall. After anchoring all the needed laminates to the wall in this way, the second covering layer can be applied as described before, thereby hiding the to each other connected laminates. When using the laminates provided by the embodiment demonstrated in Figs. 5 and 6, no extra adhesive material is needed to connect two such laminates to each other. Both laminates are positioned as described before, but sealing is achieved by pressing together the liquid tight membrane of one laminate and the adjacent mesh of the other laminate after removing the covering tape. By sealing different laminates at overlapping ends whereby one laminate encloses the other laminate, and incorporating the whole into the covering layers, the risk of leakage is much smaller than with laminates sealed together by fusing or by means of an auxiliary material.

## Claims

1. A laminate suitable as a fluid barrier in constructions made out of flexible material comprising three layers, i.e.,
a first layer consisting essentially of an alkaline resistant mesh,
a second layer consisting essentially of a liquid tight membrane, and
a third layer consisting essentially of an alkaline resistant mesh;
whereby the second layer is interposed in between the first and third layer and whereby the first and third layer are partly and locally connected to the second layer by means of mechanical bonding.

2. A laminate according to claim 1, **characterized in that** a mechanical connection is provided by placing two small strips of stitchable material as a fourth and fifth layer onto respectively the first and third layer, thereby laminating the five layers to each other by means of one or more rows of stitches.

3. A laminate according to claim 1 or 2, **characterized in that** the liquid tight membrane of the second layer is flexible, alkaline resistant and comprises a thermoplastic polymer, preferably low density polyethylene.

4. A laminate according to any of the claims 1 to 3, **characterized in that** the alkaline resistant mesh of the first and third layer comprises a flexible mesh of an alkaline resistant material, preferably a mesh made out of glass fiber.

5. A laminate according to any of the claims 1 to 4, **characterized in that** the flexible laminate is stored on a roll.

6. A method for application of the laminate, described in any of the proceeding claims 1 to 5, **characterized in that** the laminate is cut to size with a scissor or a knife, anchored to the wall or floor by pressing the first layer, in particular the parts of the mesh free from lamination, into the fresh covering layer direct on the wall and finished by pressing a fresh covering layer through the holes, that remained after lamination, in the mesh of the third layer, thereby covering the laminate.

7. A method according to claim 6 for providing a liquid tight seal between two laminates, described in any of the claims 1 to 5, **characterized in that** the overlapping piece of the second laminate is positioned between the liquid tight membrane and the mesh of the third layer of the first laminate already anchored to the wall or floor, and **characterized in that** the two laminates are attached by using a strip of laminate tape or another liquid tight, adhesive material between the second layer of the first laminate and the mesh of the third layer of the second laminate.

## Patentansprüche

1. Laminat, geeignet als eine Fluidsperrschicht in Konstruktionen, hergestellt aus flexiblem Material und umfassend drei Schichten, d.h.,
eine erste Schicht, die im Wesentlichen aus einem alkalibeständigen Gitter besteht,
eine zweite Schicht, die im Wesentlichen aus einer flüssigkeitsdichten Membran besteht, und
eine dritte Schicht, die im Wesentlichen aus einem alkalibeständigen Gitter besteht;
wobei die zweite Schicht zwischen die erste und dritte Schicht eingeschoben ist und wobei die erste und dritte Schicht durch mechanische Bindung mit der zweiten Schicht teilweise und örtlich verbunden sind.

2. Laminat nach Anspruch 1, **dadurch gekennzeichnet, dass** eine mechanische Verbindung durch Anordnen von zwei kleinen Streifen aus nähbarem Material als eine vierte und fünfte Schicht auf der ersten beziehungsweise dritten Schicht vorgesehen ist, um **dadurch** die fünf Schichten mittels einer oder mehrerer Reihen von Nähten aneinander zu laminieren.

3. Laminat nach Anspruch 1 oder 2, **dadurch gekennzeichnet, dass** die flüssigkeitsdichte Membran der zweiten Schicht flexibel und alkalibeständig ist und ein thermoplastisches Polymer, vorzugsweise Polyethylen niedriger Dichte, umfasst.

4. Laminat nach einem der Ansprüche 1 bis 3, **dadurch gekennzeichnet, dass** das alkalibeständige Gitter der ersten und dritten Schicht ein flexibles Gitter aus einem alkalibeständigen Material, vorzugsweise ein aus Glasfaser hergestelltes Gitter, umfasst.

5. Laminat nach einem der Ansprüche 1 bis 4, **dadurch gekennzeichnet, dass** das flexible Laminat auf einer Rolle gelagert ist.

6. Verfahren zum Aufbringen des Laminats nach einem der vorhergehenden Ansprüche 1 bis 5, **dadurch gekennzeichnet, dass** das Laminat mit einer Schere oder einem Messer auf die richtige Größe zugeschnitten wird, durch Drücken der ersten Schicht, insbesondere der Teile des Gitters, die frei von Laminierung sind, in die frische Deckschicht direkt auf der Wand an der Wand oder auf dem Boden verankert wird und durch Drücken einer frischen Deckschicht durch die Löcher, die nach der Laminierung im Gitter der dritten Schicht blieben, um **dadurch** das Laminat abzudecken, fertig bearbeitet wird.

7. Verfahren nach Anspruch 6 zur Bereitstellung einer flüssigkeitsdichten Dichtung zwischen zwei Laminaten nach einem der Ansprüche 1 bis 5, **dadurch gekennzeichnet, dass** das überlappende Stück des zweiten Laminats zwischen der flüssigkeitsdichten Membran und dem Gitter der dritten Schicht des ersten Laminats positioniert wird, das bereits an der Wand oder auf dem Boden verankert ist, und **dadurch gekennzeichnet, dass** die beiden Laminate durch Verwenden eines Streifens eines Laminatbandes oder eines anderen flüssigkeitsdichten Klebematerials zwischen der zweiten Schicht des ersten Laminats und dem Gitter der dritten Schicht des zweiten Laminats angebracht werden.

## Revendications

1. Stratifié approprié en tant que barrière de fluides dans des constructions, constitué de matériau flexible comprenant trois couches, c'est-à-dire,
une première couche consistant essentiellement en une maille résistante aux alcalis,
un deuxième couche consistant essentiellement en une membrane étanche aux liquides, et
une troisième couche consistant essentiellement en une maille résistante aux alcalis ;
dans lequel la deuxième couche est interposée entre la première et la troisième couche et dans lequel la première et la troisième couche sont partiellement et localement rattachées à la deuxième couche au moyen d'une liaison mécanique.

2. Stratifié selon la revendication 1, **caractérisé en ce que** une liaison mécanique est fournie en plaçant deux petites bandes de matériau pouvant être cousu comme une quatrième et une cinquième couche sur respectivement la première et la troisième couche, en stratifiant ainsi les cinq couches l'une à l'autre au moyen d'une ou plusieurs rangées de points de couture.

3. Stratifié selon la revendication 1 ou 2, **caractérisé en ce que** la membrane étanche aux liquides de la deuxième couche est flexible, résistante aux alcalis et comprend un polymère thermoplastique, de préférence un polyéthylène à faible densité.

4. Stratifié selon une quelconque des revendications 1 à 3, **caractérisé en ce que** la maille résistante aux alcalis de la première et la troisième couche comprend une maille flexible d'un matériau résistant aux alcalis, de préférence une maille faite de fibres de verre.

5. Stratifié selon une quelconque des revendications 1 à 4, **caractérisé en ce que** la stratifié flexible est emmagasiné sur un rouleau.

6. Procédé d'application du stratifié, décrit dans une quelconque des revendications précédentes 1 à 5, **caractérisé en ce que** le stratifié est coupé aux bonnes dimensions avec des ciseaux ou un couteau, ancré à la paroi ou au sol en pressant la première couche, en particulier les parties de la maille dépourvues de stratifié, sur la couche de couverture fraîche directement sur la paroi et finie par pressage d'une couche de couverture fraîche à travers les orifices, qui restaient après la stratification, dans la maille de la troisième couche, en recouvrant ainsi le stratifié.

7. Procédé selon la revendication 6 de fourniture d'un joint étanche aux liquides entre deux stratifiés, décrits dans une quelconque des revendications 1 à 5, **caractérisé en ce que** le morceau de superposition du second stratifié est positionné entre la membrane étanche aux liquides et la maille de la troisième couche du premier stratifié déjà ancré à la paroi ou au sol, et **caractérisé en ce que** les deux stratifiés sont rattachés en utilisant une bande de ruban stratifié ou un autre matériau adhésif, étanche aux liquides entre la deuxième couche du premier stratifié et la maille de la troisième couche du second stratifié.
